# EUROPEAN PATENT APPLICATION

(11) **EP 4 488 628 A1**
(43) Date of publication of application: **08.01.2025**
(21) Application number: 22928718.0
(22) Date of filing: 28.02.2022
(51) Int. Cl.: G01C 21/26, G06Q 30/06, G06Q 50/10, G08G 1/0962

(54) **CONTENT OUTPUT DEVICE, CONTENT OUTPUT METHOD, PROGRAM, AND RECORDING MEDIUM**

(71) Applicant: Pioneer Corporation, Tokyo 113-0021 (JP)
(72) Inventor: IIZAWA, Takashi, Kawagoe-shi, Saitama 350-8555 (JP); KURAMOCHI, Keita, Tokyo 113-0021 (JP)
(74) Representative: Viering, Jentschura & Partner mbB Patent- und Rechtsanwälte
(86) International application number: PCT/JP2022/008170
(87) International publication number: WO 2023/162192

(57) **Abstract**

The content output device acquires feature information related to a feature based on a position of a vehicle, and generates an audio content related to the feature based on the feature information. Further, the content output device generates a display content representing the audio content based on the feature information and words included in the audio content.

## Description

### TECHNICAL FIELD

The present invention relates to a technique available in outputting contents.

### BACKGROUND ART

There is known a technique to acquire a current position of an information terminal possessed by a user, and provide the user with information of facilities existing around the current position (for example, refer to Patent Document 1).

### RELATED ART DOCUMENT

### PATENT DOCUMENT

Patent Document 1: Japanese Patent Application Laid-Open under No. 2018-18299

### SUMMARY OF THE INVENTION

### PROBLEM TO BE SOLVED BY THE INVENTION

There is a case where the facility information is provided to the user by both audio content and display content using an information terminal. In this case, if there is no relationship between the audio content and the display content for the same facility, the provided facility information does not remain in the user's impression. In addition, even if contents for the same facility are provided multiple times, the user often does not remember the contents provided in the past.

The present invention has been made in order to solve the above problems, and a main object thereof is to provide information of features such as facilities in a manner easy to remain in the impression and memory of the user.

### MEANS FOR SOLVING THE PROBLEM

An invention described in claim is a content output device comprising: an acquisition unit configured to acquire feature information related to a feature based on a position of a vehicle; an audio content generation unit configured to generate an audio content related to the feature based on the feature information; a display content generation unit configured to generate a display content representing the audio content based on the feature information and words included in the audio content.

An invention described in claim is a content output method comprising: acquiring feature information related to a feature based on a position of a vehicle; generating an audio content related to the feature based on the feature information; generating a display content representing the audio content based on the feature information and words included in the audio content.

An invention described in claim is a program causing a computer to execute processing of: acquiring feature information related to a feature based on a position of a vehicle; generating an audio content related to the feature based on the feature information; generating a display content representing the audio content based on the feature information and words included in the audio content.

### BRIEF DESCRIPTION OF THE DRAWINGS

[FIG. 1] FIG. 1 is a diagram showing a configuration example of an audio output system according to an embodiment.
[FIG. 2] FIG. 2 is a block diagram showing a schematic configuration of an audio output device.
[FIG. 3] FIG. 3 is a block diagram showing a schematic configuration of a server device.
[FIG. 4] FIG. 4 is a block diagram showing a functional configuration of the server device for the provision of facility information.
[FIG. 5] FIG. 5 shows an example of facility information.
[FIG. 6] FIG. 6 shows an example of displaying display contents.
[FIG. 7] FIG. 7 is an example of facility information classified according to detail levels.
[FIG. 8] FIG. 8 is a flowchart of information provision processing.

### MODES FOR EXERCISING THE INVENTION

According to one aspect of the present invention, there is provided a content output device comprising: an acquisition unit configured to acquire feature information related to a feature based on a position of a vehicle; an audio content generation unit configured to generate an audio content related to the feature based on the feature information; a display content generation unit configured to generate a display content representing the audio content based on the feature information and words included in the audio content.

The above content output device acquires feature information related to a feature based on a position of a vehicle, and generates an audio content related to the feature based on the feature information. Further, the content output device generates a display content representing the audio content based on the feature information and words included in the audio content. Thus, the display content associated with the audio content can be generated and output.

According to one mode of the above content output device, the audio content generation unit changes the audio content to be generated according to a number of times of outputting the audio content, and the display content generation unit changes the display content to be generated in response to a change of the audio content. In this mode, different audio content and display content can be output according to the number of times of outputting the audio content.

According to another mode of the above content output device, the audio content generation unit increases a detail level of the audio content as the number of times of outputting the audio content increases. In this mode, as the number of times of outputting the audio content increases, detailed information about the feature is provided as the audio content and the display content.

According to still another mode of the above content output device, the display content includes a first output date of the audio content and the display content, and a last output date of the audio content and the display content. In this mode, by viewing the output date of the display content, the user can recall the audio contents output in the past.

According to still another mode of the above content output device, the display content generation unit generates the display content using the words identical to the audio content. In a preferred example, the display content generation unit generates the display content by arranging the words identical to the audio content. Thus, the display content associated with the audio content can be generated and output.

According to another aspect of the present invention, there is provided a content output method comprising: acquiring feature information related to a feature based on a position of a vehicle; generating an audio content related to the feature based on the feature information; generating a display content representing the audio content based on the feature information and words included in the audio content.

According to still another aspect of the present invention, there is provided a program causing a computer to execute processing of: acquiring feature information related to a feature based on a position of a vehicle; generating an audio content related to the feature based on the feature information; generating a display content representing the audio content based on the feature information and words included in the audio content. By executing the program on a computer, the above-described content output device can be realized. The program can be stored and handled on a storage medium.

### EMBODIMENT

A preferred embodiment of the present invention will be described below with reference to the attached drawings.

### [System configuration]

### (Overall configuration)

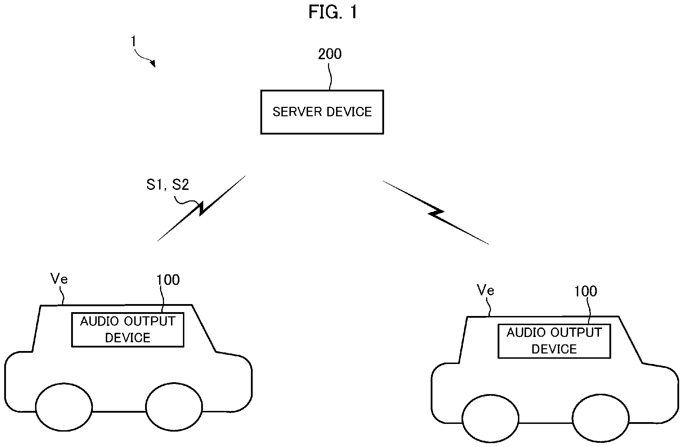

FIG. 1 is a diagram showing a configuration example of an audio output system according to the embodiment. The audio output system 1 according to the embodiment includes audio output devices 100 and a server device 200. The audio output device 100 is mounted on a vehicle Ve. The server device 200 communicates with a plurality of audio output devices 100 mounted on a plurality of vehicles Ve.

The audio output device 100 basically performs route guidance processing and information provision processing for a user who is a passenger of the vehicle Ve. For example, when a destination or the like is input by the user, the audio output device 100 transmits an upload signal S1 including the position information of the vehicle Ve and the information on the designated destination to the server device 200. The server device 200 refers to the map data, calculates a route to the destination, and transmits a control signal S2 indicating the route to the destination to the audio output device 100. The audio output device 100 performs the route guidance for the user by the audio output, based on the received control signal S2.

Also, the audio output device 100 provides various kinds of information to the user by interacting with the user. For example, when the user makes an information request, the audio output device 100 supplies the server device 200 with the upload signal S1 including information indicating the content or type of the information request and information about the driving state of the vehicle Ve. The server device 200 acquires and generates the data requested by the user, and transmits it to the audio output device 100 as the control signal S2. The audio output device 100 provides the received information to the user by the audio output.

### (Audio output device)

The audio output device 100 moves with the vehicle Ve, and provides voice-based route guidance so that the vehicle Ve travels along the guidance route. Note that "voice-based route guidance" refers to the route guidance in which the user can grasp information required for driving the vehicle Ve along the guidance route at least from voice only, and does not exclude that the audio output device 100 supplementally displays a map or the like around the current position. In the present embodiment, the audio output device 100 outputs various information related to the driving, such as a point on the route at which the guidance is required (also referred to as a "guidance point"), by voice. Here, the guidance point corresponds to, for example, an intersection with a right and left turn of the vehicle Ve, or other important passing points for the vehicle Ve to travel along the guidance route. The audio output device 100 performs voice guidance about the guidance point such as the distance from the vehicle Ve to the next guidance point and the direction to travel at the guidance point, for example. Hereinafter, the voice related to the guidance route is also called "route guidance voice".

The audio output device 100 is mounted, for example, on the upper part of a windshield or on a dashboard of the vehicle Ve. Incidentally, the audio output device 100 may be incorporated into the vehicle Ve.

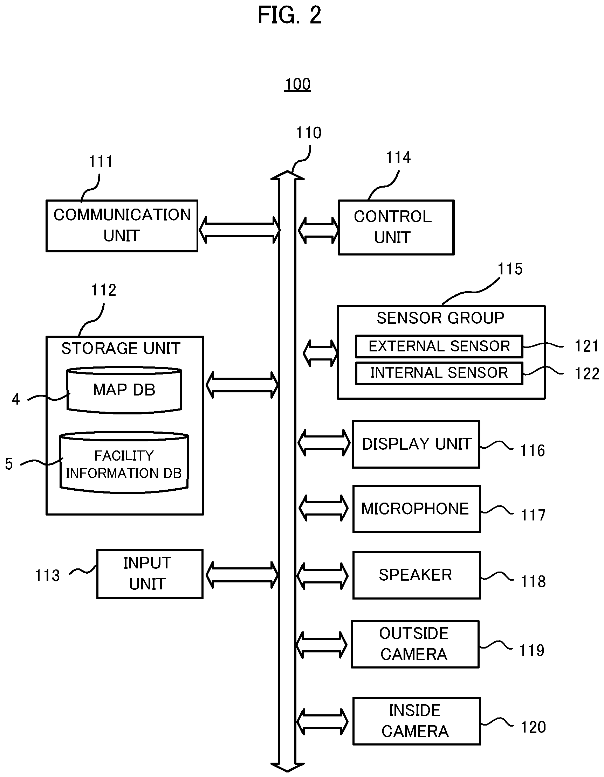

FIG. 2 is a block diagram showing the schematic configuration of the audio output device 100. The audio output device 100 mainly includes a communication unit 111, a storage unit 112, an input unit 113, a control unit 114, a sensor group 115, a display unit 116, a microphone 117, a speaker 118, an outside camera 119, and an inside camera 120. Each element in the audio output device 100 is connected to one another via a bus line 110.

The communication unit 111 performs data communication with the server device 200 based on the control of the control unit 114. The communication unit 111 may receive map data for updating a map database (hereinafter referred to as DB) 4 to be described later from the server device 200, for example.

The storage unit 112 is composed of various memories such as a RAM (Random Access Memory), a ROM (Read Only Memory), a non-volatile memory (including a hard disk drive, a flash memory, etc.). The storage unit 112 stores programs for the audio output device 100 to execute a predetermined processing. The above-described programs may include an application program for performing the voice route guidance, an application program for playing music, an application program for outputting contents (such as a TV) other than music, and the like. The storage unit 112 is also used as a working memory of the control unit 114. The programs to be executed by the audio output device 100 may be stored in a storage medium other than the storage unit 112.

The storage unit 112 stores the map DB 4 and a facility information DB 5. The map DB 4 stores a variety of records required for the route guidance. For example, the map DB 4 stores road data representing a road network expressed by a combination of nodes and links. The facility information DB 5 stores information of stores to be provided to users. The map DB 4 and the facility information DB 5 may be updated based on the map information received from a map management server by the communication unit 111 under the control of the control unit 114.

The input unit 113 is a button, a touch panel, a remote controller, or the like for the user to make an operation. The display unit 116 is a display that performs display based on the control of the control unit 114. The microphone 117 collects the sound in the vehicle Ve, particularly the utterance of the driver or the like. The speaker 118 outputs route guidance voices to the driver or the like.

The sensor group 115 includes an external sensor 121 and an internal sensor 122. The external sensor 121 includes one or more sensors, such as a lidar, radar, ultrasonic sensor, infra-red sensor, sonar, and the like, for recognizing the surrounding environment of the vehicle Ve. The internal sensor 122 is a sensor that performs positioning of the vehicle Ve, and is a GNSS (Global Navigation Satellite System) receiver, a gyro sensor, an IMU (Inertial Measurement Unit), a vehicle speed sensor, or the combination thereof, for example. The sensor group 115 may include a sensor by which the control unit 114 can derive the position of the vehicle Ve directly or indirectly (i.e., by performing an estimation process) from the outputs of the sensor group 115.

The outside camera 119 is a camera for shooting the outside of the vehicle Ve. The outside camera 119 may be only a front camera that shoots the front of the vehicle, may include a rear camera that shoots the rear of the vehicle in addition to the front camera, and may be an omnidirectional camera that can shoot all around the vehicle Ve. On the other hand, the inside camera 120 is a camera for shooting the interior of the vehicle Ve, and is provided at a position capable of shooting at least the area around the driver's seat.

The control unit 114 includes a CPU (Central Processing unit), a GPU (Graphics Processing Unit) and controls the entire audio output device 100. For example, the control unit 114 estimates the position (including the direction of the traveling direction) of the vehicle Ve based on the output of one or more sensors of the sensor group 115. When the destination is designated by the input unit 113 or the microphone 117, the control unit 114 generates the route information indicating the guidance route to the destination and performs the voice route guidance based on the route information, the estimated position information of the vehicle Ve, and the map DB 4. In this case, the control unit 114 outputs the route guidance voice from the speaker 118. The control unit 114 provides the user with the facility information of the facilities existing around the current position of the vehicle Ve. Also, the control unit 114 controls the display unit 116 to display information of the music being played back, video contents, or a map around the current position.

The processing executed by the control unit 114 is not limited to being implemented by software based on a program, but may be implemented by any combination of hardware, firmware, and software. The processing executed by the control unit 114 may be implemented by a user-programmable integrated circuit such as a FPGA (field-programmable gate array) or a microcomputer. In that case, the program executed by the control unit 114 in this embodiment may be realized by using this integrated circuit. Thus, the control unit 114 may be implemented by hardware other than a processor.

The configuration of the audio output device 100 shown in FIG. 2 is an example, and various changes may be made to the configuration shown in FIG. 2. For example, instead of storing the map DB 4 and the facility DB 5 in the storage unit 112, the control unit 114 may receive information required for the route guidance from the server device 200 through the communication unit 111. In another example, instead of including the speaker 118, the audio output device 100 may be connected to a voice output unit configured separately from the audio output device 100 by an electrical or known communication means to output the voice from the voice output unit. In this case, the voice output unit may be a speaker provided in the vehicle Ve. In yet another example, the audio output device 100 may not include the display unit 116. In this case, the audio output device 100 may perform a predetermined display by electrically connecting to an on-vehicle display unit provided in the vehicle Ve or a smartphone of the user by wired or wireless communication. Similarly, instead of including the sensor group 115, the audio output device 100 may acquire information output from the sensors attached to the vehicle Ve from the vehicle Ve, using a communication protocol such as a CAN (Controller Area Network).

### [Server device]

Based on the upload signal S1 including the destination or the like received from the audio output device 100, the server device 200 generates the route information indicating the guidance route that the vehicle Ve should travel. Then, the server device 200 generates the control signal S2 related to the information output for the information request of the user based on the information request of the user indicated by the upload signal S1 transmitted by the audio output device 100 thereafter and the traveling state of the vehicle Ve. Then, the server device 200 transmits the generated control signal S2 to the audio output device 100.

In addition, the server device 200 generates contents for providing information to and interacting with the user of the vehicle Ve and transmits the contents to the audio output device 100. The information provision to the user is mainly a push-type information provision that starts from the server device 200 when the vehicle Ve reaches a predetermined driving state as a trigger. The interaction with the user is basically the pull-type interaction which starts from the inquiry and question from the user. However, the interactions with users may be initiated from the provision of push-type content.

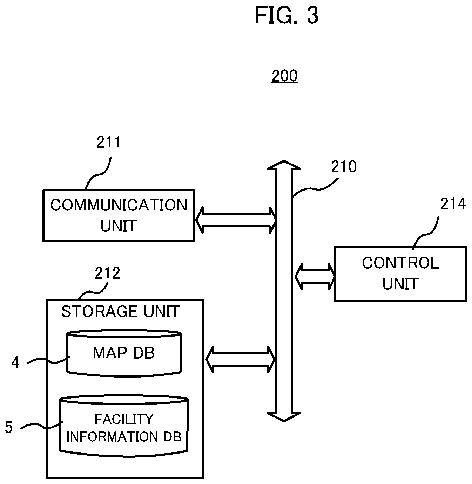

FIG. 3 is a diagram illustrating an example of the schematic configuration of the server device 200. The server device 200 mainly includes a communication unit 211, a storage unit 212, and a control unit 214. Each element in the server device 200 is interconnected via a bus line 210.

The communication unit 211 performs data communication with an external device such as the audio output device 100 based on the control of the control unit 214. The storage unit 212 is configured by various memories such as a RAM, a ROM, a non-volatile memory (including a hard disk drive, a flash memory, etc.). The storage unit 212 stores programs for the server device 200 to execute predetermined processing. The storage unit 212 includes the map DB 4 and the facility information DB 5.

The control unit 214 includes a CPU, a GPU and the like, and controls the entire server device 200. The control unit 214 operates together with the audio output device 100 by executing a program stored in the storage unit 212, and executes route guidance processing, information provision processing, or the like for the user. For example, the control unit 214 generates the control signal S2 related to the route information indicating the guidance route or the information output in response to the information request of the user, based on the upload signal S1 received from the audio output device 100 through the communication unit 211. Then, the control unit 214 transmits the generated control signal S2 to the audio output device 100 through the communication unit 211.

### <Push-type information provision>

Next, the push-type information provision will be described. The push-type information provision means that, when the vehicle Ve becomes a predetermined driving state, the audio output device 100 outputs, to the user, the information related to the driving state. Specifically, the audio output device 100 acquires the driving state information indicating the driving state of the vehicle Ve based on the outputs of the sensor group 115 as described above and transmits the driving state information to the server device 200. The server device 200 stores the table data for performing push-type information provision in the storage unit 212. The server device 200 refers to the table data. When the driving state information received from the audio output device 100 mounted on the vehicle Ve matches the trigger condition specified in the table data, the server device 200 acquires the information to be output using the text data corresponding to the trigger condition, and transmits the information to the audio output device 100. The audio output device 100 outputs the information received from the server device 200. In this way, the information corresponding to the driving state of the vehicle Ve are output to the user by voice.

The driving state information may include, for example, at least one piece of information that can be acquired based on the functions of each part of the audio output device 100, such as the position of the vehicle Ve, the direction of the vehicle Ve, the traffic information around the position of the vehicle Ve (including the speed regulation and the traffic jam information, etc.), the present time, the destination, and the like. The driving state information may include any of the sound obtained by the microphone 117 (other than the utterance of the user), the image captured by the outside camera 119, and the image captured by the inside camera 120. Further, the driving state information may include information received from the server device 200 through the communication unit 111.

### <Provision of facility information>

Next, provision of facility information will be described as an example of the above-described push-type information provision. Provision of facility information means that the vehicle Ve recommends, to the user, a facility that exists on or around the route to be traveled. Specifically, in the present embodiment, the server device 200 provides the user with information about facilities located around the current position of the vehicle Ve by the push-type information provision.

### [Functional configuration]

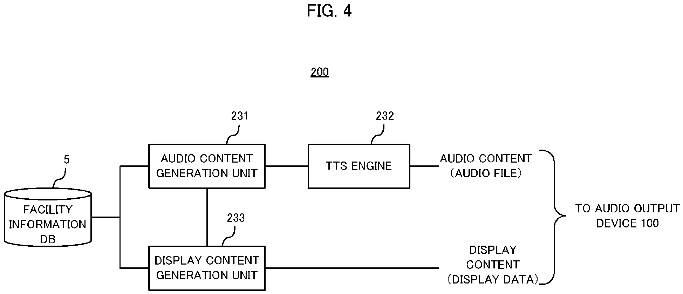

FIG. 4 shows a functional configuration of the server device 200 for providing facility information. As shown, the server device 200 functionally includes an audio content generation unit 231, a TTS (Text To Speech) engine 232, and a display content generation unit 233. The audio content generation unit 231 and the display content generation unit 233 acquire facility information from the facility information DB 5.

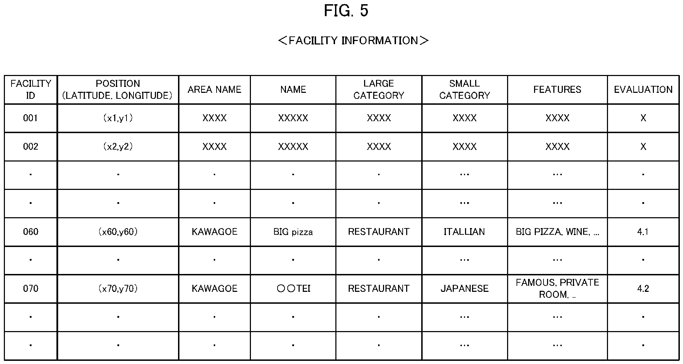

Facility information is also called POI (Point Of Interest). FIG. 5 shows an example of facility information. In the example of FIG. 5, the facility information includes a position (latitude, longitude), an area name, a name, a large category, a small category, features, and evaluation, in association with a facility ID given to each facility.

The "position (latitude, longitude)" is the positional information of the facility. The "area name" is information indicating the geographical area to which the facility belongs, such as a region name. The "name" is the name of the facility. For example, if the facility is a company, the company name is used. If the facility is a store, the store name is used. The "large category" is a large category that indicates the facility, i.e., the major classification. The "small category" is a small category that indicates the facility, i.e., the minor classification. The "features" are the features of that facility. The "evaluation" is the evaluation of the facility by multiple users, which is expressed by a value ranging from "0" to "5", for example.

The audio content generation unit 231 refers to the facility information DB 5 and acquires the facility information of the facilities existing within a predetermined range from the current position of the vehicle Ve. The audio content generation unit 231 selects some pieces of the information included in the facility information and combines them to generate the audio content. For example, when the current position of the vehicle Ve is near Kawagoe, the audio content generation unit 231 acquires data such as the name, small category, and features for the facility of the facility ID "060" illustrated in FIG. 5, and combines these data to generate the audio content such as "There is an Italian restaurant "BIG Pizza" where large pizzas are popular". The audio content generation unit 231 may generate the audio content by inserting a name, a feature, or the like included in the facility information into a plurality of common phrases (templates) prepared in advance to create sentences. Then, the audio content generation unit 231 outputs the text data of the generated audio content to the TTS engine 232 and the display content generation unit 233.

The TTS engines 232 converts the input text data of the audio content to an audio file and outputs the audio file. The audio file is transmitted to the audio output device 100.

The display content generation unit 233 refers to the facility information DB 5 in the same manner as the audio content generation unit 231 and acquires the facility information of the facilities existing within the predetermined range from the current position of the vehicle Ve. Then, the display content generation unit 233 generates the display contents by using the facility information acquired from the facility information DB 5 and the text data of the audio content input from the audio content generation unit 231.

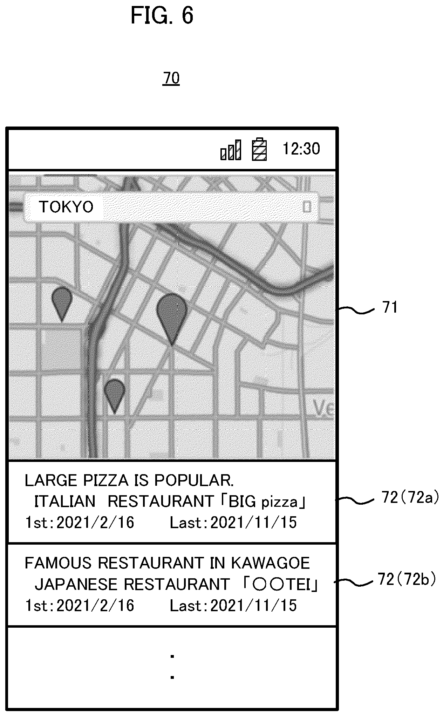

FIG. 6 shows a display example of the display contents. The example of FIG. 6 is an example in which a smartphone is used as the display unit 116. As shown, the display example 70 includes map data 71 and display contents 72. The map data 71 shows a map around the current position of the vehicle Ve. In the display example 70 of FIG. 6, multiple display contents 72 (72a, 72b,...) are displayed. Each display content 72 relates to a different facility.

The display content generation unit 233 generates the display content so as to be a summary the audio content. For example, the display content generation unit 233 refers to the text data of the audio content and generates the display content using the same words as the audio content. In the display example 70 of FIG. 6, the display content 72a relates to the Italian restaurant "BIG Pizza." For example, it is assumed that the audio content generation unit 231 generated the audio content "There is an Italian restaurant "BIG Pizza" where large pizzas are popular" for this facility as mentioned above. In this case, the display content generation unit 233 generates the display content such as "Large pizza is popular, Italian restaurant "BIG pizza"" using the same words as the audio content as shown in FIG. 6.

The display content generation unit 233 may combine some pieces of words included in the text data of the audio content with words that are acquired from the facility information DB 5 but are not included in the audio content to generate the display content. In this way, the display content generation unit 233 generates display data of the display content. The display data of the display content is image data of the display content or data necessary for reproducing the display content in the audio output device 100. The display data of the content display is transmitted to the audio output device 100.

The audio output device 100 outputs the audio contents from the speaker 118 by reproducing the voice files received from the server device 200. Also, the audio output device 100 displays the display contents on the display unit 116 using the display data received from the server device 200.

### [Features of contents]

### (Relationship between audio content and display content)

Next, the relationship between the audio content and the display content will be described. The audio content generation unit 231 extracts multiple words from the facility information illustrated in FIG. 5, and creates one or more sentences using the words to make the audio content. In contrast, the display content generation unit 233 generates the display content by arranging at least a part of the multiple words included in the audio content. As described above, since the display content generation unit 233 generates the display content using the same words as the audio content for a certain facility, the audio content and the display content are expressed in a similar manner and are easily retained in the user's memory.

### (Change of contents output)

Next, the change of the contents of the audio content and the display content will be described. Hereinafter, for convenience of explanation, the audio content and the display content are collectively referred to as the "content", and the audio content generation unit 231 and the display content generation unit 233 are collectively referred to as the "content generation unit."

The content generation unit outputs the facility information of a different content every time when facility information about a certain facility is output. For example, when the vehicle Ve passes the vicinity of a facility X for the first time, the content generation unit generates the content using four words extracted from the facility information. Thereafter, when the vehicle Ve passes the vicinity of the same facility X again (for the second time), the content generation unit generates the content using multiple words in which at least one of them is different from the four words used for generating the content for the first time. This results in the outputting of the different content for the same facility X each time the vehicle Ve passes the vicinity of the facility X. Therefore, the user can obtain various information about the facility X by repeatedly passing near the facility X.

Here, description will be given of one method to change the content to be output for each facility. In one method, the content generation unit changes the words extracted from the facility information to generate the content. For example, in the case of the facility information shown in FIG. 5, the content generation unit uses the same words every time for basic information such as "area name" and "name". For other information, the content generation unit selects one of "large category" and "small category" or randomly uses a plurality of words included in "features", thereby to change the content, for example.

In another method, the content generation unit may change the content gradually to detailed information according to the number of times the vehicle Ve passes the vicinity of the facility. In other words, the content generation unit changes the content from general information to detailed information according to the number of times of outputting the content for a facility. For example, when the vehicle V passes by the facility X for the first time, the content generation unit generates the content that outlines the facility X. Then, the content generation unit includes more detailed information about the facility X in the content as the number of times the vehicle passes by the same facility X increases. This allows the user to gain deeper knowledge of the facility by passing through the facility X many times.

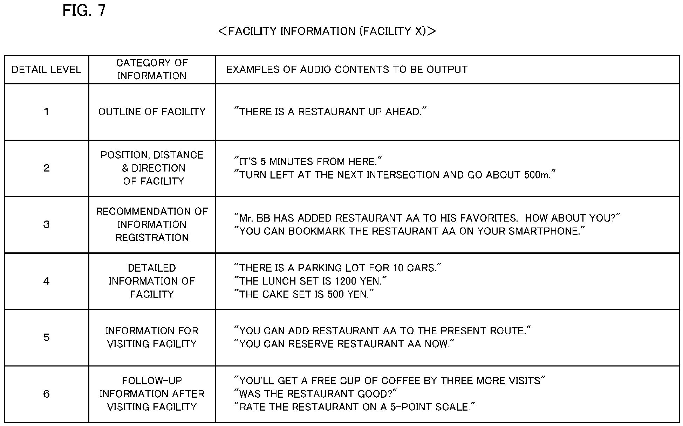

FIG. 7 is an example of facility information that is prepared in the case of outputting more detailed information according to the number of times of outputting contents. The example shown in FIG. 7 is facility information related to a certain facility X, which is prepared by classifying it into multiple detail levels (six levels in this example) as shown in FIG. 7. In FIG. 7, it is assumed that the smaller the number of the detail level is, the lower the detail level is, i.e., the information is schematic. Also, the larger the number of the detail level is, the higher the detail level is, i.e., the information is in detail.

Specifically, the detail level 1 is the lowest detail level. The information of detail level 1 corresponds to the category of an outline of facility. An example of information of the detail level 1 is "There is a restaurant up ahead."

The detail level 2 is the second lowest detail level. The information of the detail level 2 corresponds to the categories such as the position, distance, and direction of the facility. Examples of information of the detail level 2 are "It's five minutes from here." and "Turn left at the next intersection and go about 500m."

The detail level 3 is the third lowest detail level. The information of the detail level 3 corresponds to the category of recommendation of information registration. Examples of the information of the detail level 3 include "Mr. BB has added restaurant AA to his favorites. How about you?" and "You can bookmark the restaurant AA on your smartphone."

The detail level 4 is the third highest detail level. The information of the detail level 4 corresponds to the category of the detailed information of the facility. Examples of the information of the detail level 4 include "There is a parking lot for 10 cars.", "The lunch set is 1200 yen.", "The cake set is 500 yen." etc.

The detail level 5 is the second highest detail level. The information of the detail level 5 corresponds to the category of information for visiting the facility. Examples of information of the detail level 5 include "You can add restaurant AA to the present route", "You can reserve restaurant AA now", etc.

The detail level 6 is the highest detail level. The information of the detail level 6 corresponds to the category of the follow-up information after visiting the facility. Examples of the information of the detail level 6 include "You'll get a free cup of coffee by three more visits.", "Was the restaurant good?, "Rate the restaurant on a 5-point scale." and so on.

In this way, by changing the information in the content to more detailed information as the number of times of outputting the contents for a facility increases, it is possible to provide the user with more detailed information about the facility that the user repeatedly passes through.

### (Displaying content output date)

Next, the content output date included in the display content will be described. As shown in FIG. 6, the display content 72 includes the date of outputting the display content. In the example of FIG. 6, the date the vehicle Ve first passed near the Italian restaurant "BIG Pizza" and the display content 72a related to the facility "BIG Pizza" was first output, i.e. the first output date, is February 16, 2021. In addition, the date the vehicle Ve passed near the same facility and the display content 72a was output, i.e., the last output date is November 15, 2021. For this reason, the display content 72a includes the first output date "2021/2/16" and the last output date "2021/11/15" of the content.

The last output date of the display content is updated each time the display content for the facility is output. The server device 200 stores historical data of the date or the date and time of outputting the display contents related to the facility (hereinafter, also referred to as "contents output history") for each facility in association with the user ID or the vehicle ID. Then, the server device 200 updates the contents output history each time it outputs the display content for that facility. When generating the display content for a facility, the display content generation unit 233 refers to the contents output history and includes the first output date and the last output date of the display content for the facility in the display content. In the case where the display content has been output only once in the past, the output date of the one time may be displayed as either or both of the "first output date" and "the last output date."

Thus, the user can recall the audio contents output in the past by looking at the date when the user passed near the facility in the past. While the date of outputting the content in the past is included in the display content in the example of FIG. 6, not only the "date" but also the "time" may be displayed. That is, the date and time of outputting the content may be displayed.

### [Information provision processing]

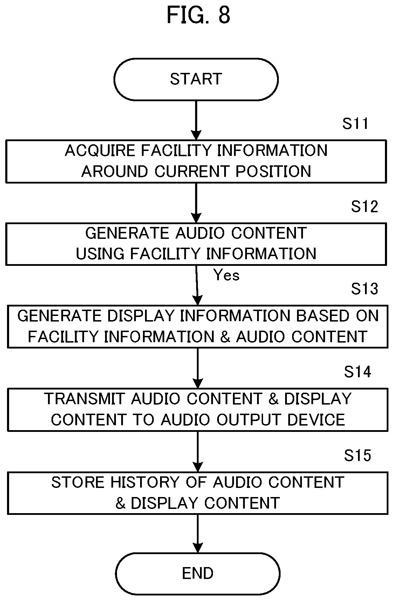

FIG. 8 is a flowchart of information provision processing. This processing is realized by the server device 200 shown in FIG. 3, which controls the audio output device 100. Incidentally, this processing is realized by the control unit 214, which executes a program prepared in advance and operates as each element shown in FIG. 4. Further, this processing is repeatedly executed at each predetermined time.

First, the control unit 114 of the audio output device 100 acquires the driving state information related to the current driving state of the vehicle Ve and transmits it to the server device 200. The server device 200 acquires the driving state information from the audio output device 100, refers to the facility information in the facility information DB 5, and acquires the facility information around the current position of the vehicle Ve (step S11). Specifically, the server device 200 acquires facility information of the facilities that exist within a predetermined range from the current position of the vehicle Ve. Note that the "predetermined range" is determined in advance and the range within a radius of Xm from the current position, for example.

Next, the audio content generation unit 231 of the server device 200 generates the audio content using the acquired facility information (step S12). Specifically, the audio content generation unit 231 extracts a plurality of words included in the facility information and generates text data of the audio content by creating sentences with those words, as described above. Then, the TTS engine 232 converts the text data of the audio content into an audio file.

Next, the display content generation unit 233 generates the display content based on the facility information and the audio content generated by the audio content generation unit 231 (step S 13). Specifically, the display content generation unit 233 generates display data of the display content by arranging the words included in the audio content. The display content generation unit 233 refers to the contents output history described above and includes, for each facility, the past output dates of the display content related to the facility, i.e., the first output date and the last output date, in the display content.

Next, the server device 200 transmits the audio file of the audio contents and the display data of the display contents to the audio output device 100 (step S14). The audio output device 100 reproduces the audio file to output the audio content when receiving the audio file of the audio content. Also, the audio output device 100 displays the display content on the display unit 116 when receiving the display data of the display content. In this way, the audio contents and the display contents are output to the user.

Next, the server device 200 stores information of the audio contents and the display contents transmitted to the audio output device 100 in step S14 in the storage unit 212 as the contents output history (step S15). Specifically, the server device 200 stores the audio contents and the display contents, the date and/or time when they are transmitted to the audio output device 100, and the like as the contents output history. Then, the information provision processing ends.

### [Modification]

### (Modification 1)

In the above-described embodiment, a configuration for generating contents shown in FIG. 4 is provided in the server device 200, and audio contents and display contents are generated on the server device 200. Instead, a configuration for generating contents may be provided in the audio output device 100 to generate and output audio contents and display contents at the audio output device 100.

### (Modification 2)

In the above embodiment, facility information such as a store is provided. Instead, information for various objects that should be provided to the user while the vehicle Ve is running, e.g., a river, a bridge, or the like, may be provided in the same manner as the facility information. In this specification, objects of information provision including facilities such as stores, rivers, a bridge, etc. are collectively referred to as "features".

### (Modification 3)

In the above-described embodiment, the program can be stored using various types of non-transitory computer-readable medium and supplied to a controller or the like that is a computer. The non-transitory computer-readable medium includes various types of tangible storage medium. Examples of the non-transitory computer-readable medium include a magnetic storage medium (e.g., a flexible disk, a magnetic tape, a hard disk drive), a magneto-optical storage medium (e.g., a magneto-optical disk), a CD-ROM (Read Only Memory), a CD-R, a CD-R/W, a solid-state memory (e.g., a mask ROM, a PROM (Programmable ROM), an EPROM (Erasable PROM), a flash ROM, and a RAM (Random Access Memory)).

While the present invention has been described with reference to the embodiments, the present invention is not limited to the above embodiments. Various modifications that can be understood by a person skilled in the art within the scope of the present invention can be made to the configuration and details of the present invention. That is, the present invention includes, of course, various modifications and modifications that may be made by a person skilled in the art according to the entire disclosure and technical concepts including the scope of claims. In addition, each disclosure of the above-mentioned patent documents cited shall be incorporated by reference in this document.

### DESCRIPTION OF REFERENCE NUMBERS

100 Audio output device
200 Server device
111, 211 Communication unit
112, 212 Storage unit
113 Input unit
114,214 Control unit
115 Sensor group
116 Display unit
117 Microphone
118 Speaker
119 Outside camera
120 Inside camera

## Claims

1. A content output device comprising:
an acquisition unit configured to acquire feature information related to a feature based on a position of a vehicle;
an audio content generation unit configured to generate an audio content related to the feature based on the feature information;
a display content generation unit configured to generate a display content representing the audio content based on the feature information and words included in the audio content.

2. The content output device according to claim 1,
wherein the audio content generation unit changes the audio content to be generated according to a number of times of outputting the audio content, and
wherein the display content generation unit changes the display content to be generated in response to a change of the audio content.

3. The content output device according to claim 2, wherein the audio content generation unit increases a detail level of the audio content as the number of times of outputting the audio content increases.

4. The content output device according to any one of claims 1 to 3, wherein the display content includes a first output date of the audio content and the display content, and a last output date of the audio content and the display content.

5. The content output device according to any one of claims 1 to 4, wherein the display content generation unit generates the display content using the words identical to the audio content.

6. The content output device according to claim 5, wherein the display content generation unit generates the display content by arranging the words identical to the audio content.

7. A content output method comprising:
acquiring feature information related to a feature based on a position of a vehicle;
generating an audio content related to the feature based on the feature information;
generating a display content representing the audio content based on the feature information and words included in the audio content.

8. A program causing a computer to execute processing of:
acquiring feature information related to a feature based on a position of a vehicle;
generating an audio content related to the feature based on the feature information;
generating a display content representing the audio content based on the feature information and words included in the audio content.

9. A storage medium which stores the program according to claim 8.
